# EUROPEAN PATENT APPLICATION

(11) **EP 4 776 209 A1**
(43) Date of publication of application: **15.07.2026**
(21) Application number: 25151779.3
(22) Date of filing: 14.01.2025
(51) Int. Cl.: G06Q 20/38, G06Q 20/40

(54) **METHOD FOR PREVENTING TOKENIZED PAYMENT FRAUD**

(71) Applicant: Mastercard International, Inc., Purchase, NY 10577 (US)
(72) Inventor: NOË, James Christian, West Wickham (GB); VENOT, Claire, Rambouillet (FR); SYLVESTER, Dave, Brentwood, Essex (GB)
(74) Representative: Murgitroyd & Company

(57) **Abstract**

The present disclosure relates to methods for preventing tokenized payment fraud. The methods include receiving a second request from a user device to provision token credentials related to a funding account and provisioning second token credentials to the user device in response to the second request. The second token credentials include an account identifier, expiry data, and a token PAN sequence number that are identical to the account identifier, expiry data and token PAN sequence number of first token credentials. In one fraud prevention solution, a token cryptographic sequence number is stored in discretionary data provisioned to the user device. In a second fraud prevention solution, a token cryptographic sequence number is stored away from the user device.

## Description

### TECHNICAL FIELD

The present disclosure relates generally to methods for preventing tokenized payment fraud and finds particular, although not exclusive, utility in providing methods for provisioning token credentials such that opportunities for deferred payment transaction fraud, for example transit fraud, are reduced.

### BACKGROUND

A typical transaction in a transit environment may be initiated by a consumer at a physical terminal operated by a transit operator, such as a gate at a train station, a reader on a bus, a platform validator, or a revenue inspection device. The physical terminal may prevent or restrict the consumer from passing therethrough unless one or more conditions are met, such as the consumer being in possession of a valid ticket or providing valid payment credentials.

A complete transaction authentication method may include a local transaction authentication and a remote transaction authentication. The local transaction authentication may be based at least partially on a local cryptographic process such as DDA, CDA or EDA-MAC as specified in EMV. The local transaction authentication is typically completed without communication with the issuing bank or the processing network.

Transit operator standards typically require physical terminals to allow a minimum number of consumers to pass therethrough in a given time frame, such as forty per minute.
It is typically not possible to complete the remote transaction authentication in a short enough time to prevent the consumer passing through the terminal until the remote transaction authentication is complete.

The local transaction authentication value may be validated locally by the terminal. As such, a provisional validation may be based upon the local validation of the local transaction authentication value by the terminal, avoiding the need to traverse a network, which may not be compatible with the desired provisional validation time. Following the provisional validation, the consumer may be allowed to access the transit network. Allowing the cardholder to enter at this time opens a risk that there may be no money in the account, the account may be closed, there may be no such account, or a criminal may be attempting to fraudulently access transit services. This risk is typically frequently referred to as the "first ride risk" (FRR).

If the remote transaction authentication is subsequently declined, for example due to a lack of funds, the consumer is typically allowed to leave the transit network completing their journey and their payment credentials are added to a deny list to prevent further use.

The deny list may record entries of funding account credentials which have been determined to be delinquent or otherwise in a state to be refused. Funding account credentials are typically payment card details, because systems still in use were designed before tokenization existed. Therefore, if the consumer were to attempt a second journey with the delinquent funding account credentials, the terminal would recognize the credentials as being on the deny list and deny the consumer entry to the transit network, thereby preventing the consumer from undertaking a second journey on the transit network without sufficient funds.

The process of tokenization is to create a set of token credentials linked to, but not the same as a set of funding account credentials. These token credentials can then be used at a point of transaction instead of the funding credentials.

If the payment credentials are token credentials instead of funding account credentials, the deny list may not have access to the underlying funding account credentials, only the token credentials. The consumer may delete the token and request further token credentials be provisioned. According to current token provisioning methods, the consumer would be provisioned with fresh token credentials that are different from the first token credentials. As such, the consumer may then use the second token credentials to access the transit network, bypassing the deny list, even without sufficient funds.

It is therefore desirable to provide a method for provisioning token credentials such that opportunities for deferred authorization fraud are reduced. The aspects of the present disclosure provide such methods.

### SUMMARY

According to a first aspect, there is provided a method for preventing tokenized payment transit fraud, the method comprising: receiving a first request from a user device to provision token credentials related to a funding account; provisioning first token credentials to the user device in response to the first request, wherein the first token credentials comprise an account identifier, expiry data, a token PAN sequence number and first discretionary data; receiving a first deletion request to delete the first token credentials from the user device; receiving a second request from the user device to provision token credentials related to the funding account; and provisioning second token credentials to the user device in response to the second request, wherein the second token credentials comprise an account identifier, expiry data, a token PAN sequence number and second discretionary data; wherein the account identifier, expiry data and token PAN sequence number of the second token credentials are identical to the account identifier, expiry data and token PAN sequence number of the first token credentials; and wherein the second discretionary data differs from the first discretionary data at least in that the first discretionary data comprises a first token cryptographic sequence number and the second discretionary data comprises a second token cryptographic sequence number that is different from the first token cryptographic sequence number.

The deny list may record entries of token or funding account credentials which are associated with a previously declined authorization. Issuers may decline authorization requests for a variety of reasons, such as insufficient funds, transaction not allowed, fraud suspected, use of a lost or stolen card, or other such reasons. The deny list may record the account identifier, expiry data and token PAN sequence number of such credentials.

Provisioning second token credentials with the method of the first aspect means that, when a user attempts to gain access to a transit network with the second token credentials, the transit system will recognize the second token credentials as the first token credentials on the deny list and refuse access to the transit network.

Furthermore, when processing a transaction with the second token credentials, the transaction still has the fraud prevention techniques associated with incrementing or otherwise changing a sequence number, which is available in the discretionary data.

Tokenized payment fraud may be any fraudulent activity surrounding the attempted fraudulent payment with tokenized payment credentials. Tokenized payment transit fraud may be any fraudulent activity surrounding the attempted fraudulent payment with tokenized payment credentials in a transit environment. For example, the tokenized payment transit fraud may be a user accessing a transit network and completing a journey with tokenized payment credentials when the funding account associated with the tokenized payment credentials do not hold sufficient funds to pay for the journey.

The first request to provision token credentials related to a funding account is received from a user device, such as a smart phone, a smart watch, or any other device capable of storing tokenized payment credentials.

Provisioning the first token credentials to the user device may mean that the first token credentials are sent or otherwise made available to the user device to store thereon.

The account identifier may be or comprise a number string. The number string may be between 13 and 19 digits long. The account identifier may be or resemble a Primary Account Number (PAN) which may follow the ISO/IEC 7812 standards. The expiry data may comprise data signifying a month and year following which the credentials are deemed to have expired and may no longer be used to process a transaction. In some examples, the expiry data may also comprise data signifying a day, along with the month and year. In prior known methods, the token PAN sequence number comprises data signifying a position of the token in a sequence of provisioned tokens. For example, the sequence number of the first provisioned token may comprise 0, the sequence number of the second provisioned token may comprise 1, etc. In the present invention, each provisioned token, regardless of the position of the token in a sequence of provisioned tokens, may comprise identical data. For example, the token PAN sequence number of each of the first, second, and any further token credentials, may comprise 0. The first discretionary data and second discretionary data may be data included in an authorization message that is typically not required to complete a transaction with prior known methods.

When a user operates their user device to delete a token, a deletion request is generated and sent. Receipt of the first deletion request signifies that the first token credentials have been deleted from the user device. The second token credentials may only be provisioned to the user device following receipt of the first deletion request.

The second request to provision token credentials related to the funding account may be received from the same user device to which the first token credentials were provisioned. The second request to provision token credentials may only be sent after the first token credentials have been deleted or otherwise removed from the user device. Deletion of the first token credentials may trigger the sending of a message to the issuer noting that the first token credentials have been deleted. Accordingly, prior to provisioning the second token credentials, the method may comprise receiving a message noting that the first token credentials have been deleted from the user device.

Provisioning second token credentials to the user device may mean that the second token credentials are sent or otherwise made available to the user device to store thereon.

The account identifier, expiry data and token PAN sequence number of the second token credentials being identical to the account identifier, expiry data and token PAN sequence number of the first token credentials may mean that the first and second token credentials comprise the same account identifier, expiry data and token PAN sequence number. Therefore, although the first token and the second token are different, the information contained in the first token credentials and the second token credentials that is considered by the transit agency is identical.

The second discretionary data differs from the first discretionary data at least in that the second discretionary data comprises a token cryptographic sequence number that differs from the token cryptographic sequence number contained in the first discretionary data. Accordingly, when processing a transaction authorization request, the token cryptographic sequence number may be retrieved. The standard PAN sequence number field, such as the EMV field, may contain the token PAN sequence number, which may be constant across all tokens provisioned to the user device. In this way, the sequence number in the standard PAN sequence number field may be ignored when processing all transaction authorization requests, with the true or relevant cryptographic sequence number being retrieved from the discretionary data.

The method may further comprise: prior to receiving the first deletion request, receiving a payment authorization request comprising the first token credentials; retrieving the first token cryptographic sequence number from the first discretionary data; and determining an authorization status based on the account identifier, expiry data and first token cryptographic sequence number.

The method may further comprise: subsequent to provisioning the second token credentials, receiving a payment authorization request comprising the second token credentials; retrieving the second token cryptographic sequence number from the second discretionary data; and determining an authorization status based on the account identifier, expiry data and second token cryptographic sequence number.

The method may further comprise: receiving a payment authorization request comprising the token credentials; retrieving the token cryptographic sequence number from the discretionary data; and determining an authorization status based on the account identifier, expiry data and token cryptographic sequence number.

Accordingly, the token PAN sequence number presented to the transit terminal is always the same regardless of the number of times the token has been reprovisioned. However, the token cryptographic sequence number is available to the payment authorizing party, such that the fraud prevention techniques associated with an incremented or otherwise different token cryptographic sequence number, such as preventing replay attacks, is preserved.

When determining an authorization status, the token PAN sequence number may be discarded in favour of the token cryptographic sequence number. In an alternative example, the method may include comparing the token PAN sequence number and the token cryptographic sequence number. If the token PAN sequence number and the token cryptographic sequence number are different, the authorization status may be determined based on the token cryptographic sequence number. If the token PAN sequence number and the token cryptographic sequence number are the same, either may be used. In some examples, an authorization request may be received with a message including only one of the token PAN sequence number and the token cryptographic sequence number, in which case the sequence number received may be used to determine the authorization status.

The user or consumer may initiate a transaction at a physical terminal operated by a transit operator. The physical terminal may be an area, a bay, a device, or any other physical structure with which a consumer may momentarily engage before proceeding onwards with their journey on the transit network. The physical terminal may include a display, input means, a memory, a moveable barrier, and/or any other desired or necessary physical components. The physical terminal may prevent or restrict a consumer from passing therethrough unless one or more conditions are met, such as the consumer being in possession of a valid ticket or providing payment credentials that are not present on the deny list.

A transit operator may be any party that is responsible for the operation of a transit system, such as a rail or bus operator. The consumer device may be a near-field communication (NFC) enabled device, such as a smart phone or other smart device. The consumer device may be able to store token credentials locally. A transaction may be initiated by bringing the NFC enabled device within an NFC operational distance of an NFC transceiver of the transit terminal, which is approximately 10 centimetres or usually less. Alternative communication protocols such as Bluetooth^{®}, an ultra-wide band communication protocol or an infrared communication protocol may be used.

The terminal has the ability to interrogate the deny list. A master deny list may be stored centrally and away from the terminal. A copy of the deny list may be stored locally on a memory associated with the terminal. The interrogation of the copy of the deny list stored locally may take less time than interrogation of the master deny list. The copy of the deny list stored locally may be continually updated to match the master deny list. The deny list may be continually updated. Continually updated may mean updated every 1 minute, 2 minutes, 5 minutes, 15 minutes, 30 minutes, 1 hour, or any other desired time interval. In this way, the terminal may have access to a relatively up to date deny list, without having to consult the deny list over a network which may cause undesirable delays. Alternatively or additionally, an updated deny list may be provided to the terminal after a predetermined number of changes have been made to the deny list and/or upon initiation by an operator employee. Alternatively, the deny list may be stored on a common access server, such as a network server operated by the transit operator, provided the access to the deny list is compatible with desired or necessary transaction times. In some examples, deltas including additions and removals to the deny list may be stored periodically.

The token cryptographic sequence number may occupy any one, two, or more digits of the discretionary data. Increasing the number of digits used increases the greatest number of different values available. The token cryptographic sequence number may occupy adjacent digits, or non-adjacent digits of the discretionary data.

The first and second discretionary data may be configured such that at least a first digit of the first and second discretionary data comprises the token cryptographic sequence number. The first digit of the discretionary data field may be reserved for the token cryptographic sequence number. Providing the token cryptographic sequence number in an assigned digit of the discretionary data may mean that the current automated authorization methods may be simply updated to refer to the assigned digit of the discretionary data, rather than the regular EMV sequence number field. In other examples, any digit other than the first digit of the discretionary data field may be used for the token cryptographic sequence number. In this implementation, the regular EMV field used to store the sequence number will always have the value of the original credentials, including the token PAN sequence number, such that any deny list held locally at a reader may continue to effectively block re-provisioned credentials, as the re-provisioned credentials each include the same token PAN sequence number in the EMV field.

The method may further comprise: receiving a second deletion request to delete the second token credentials from the user device; receiving a third request from the user device to provision token credentials related to the funding account; and provisioning third token credentials to the user device in response to the third request. The third token credentials may comprise an account identifier, expiry data, a token PAN sequence number and third discretionary data. The account identifier, expiry data and token PAN sequence number of the third token credentials may be identical to the account identifier, expiry data and token PAN sequence number of the first and second token credentials. The third discretionary data may differ from the first and second discretionary data at least in that the third discretionary data comprises a third token cryptographic sequence number that is different from both of the first and second token cryptographic sequence numbers.

The third token credentials may be identical to the first and second token credentials, save for the token cryptographic sequence number being incremented or otherwise different from that included in the first and second token credentials.

The method may further comprise: receiving a payment authorization request comprising the third token credentials; retrieving the third token cryptographic sequence number from the third discretionary data; and determining an authorization status based on the account identifier, expiry data and third token cryptographic sequence number.

In this way, the same authorization method may be used regardless of the number of times the token has been reprovisioned.

According to a second aspect, there is provided a method for preventing tokenized payment transit fraud, the method comprising: receiving a first request from a user device to provision token credentials related to a funding account; provisioning first token credentials to the user device in response to the first request, wherein the first token credentials comprise an account identifier, expiry data and a token PAN sequence number; storing a first token cryptographic sequence number of the first token credentials; receiving a first deletion request to delete the first token credentials from the user device; receiving a second request from the user device to provision token credentials related to the funding account; provisioning second token credentials to the user device in response to the second request, wherein the second token credentials comprise an account identifier, expiry data and a token PAN sequence number; generating a second token cryptographic sequence number of the second token credentials, wherein the second token cryptographic sequence number is different from the first token cryptographic sequence number; and storing the second token cryptographic sequence number; wherein the account identifier, expiry data and token PAN sequence number of the second token credentials are identical to the account identifier, expiry data and token PAN sequence number of the first token credentials.

Provisioning second token credentials with the method of the second aspect means that, when a user attempts to gain access to a transit network with the second token credentials, the transit system will recognize the second token credentials as the first token credentials on the deny list and refuse access to the transit network.

Furthermore, when processing a transaction with the second token credentials, the transaction still has the fraud prevention techniques associated with incrementing or otherwise changing a sequence number, which is stored separately from the second token credentials.

The method of the second aspect may be identical to the method of the first aspect, save for the location of the token cryptographic sequence number. In this first aspect, the token cryptographic sequence number is stored in the token discretionary data field, whereas in the second aspect, the token cryptographic sequence number is stored separately from the provisioned token credentials.

The token cryptographic sequence number may also be stored on the user device, but not included in an authorization request message. The token cryptographic sequence number may be used by the device when creating the authorization request message. In particular, currently used cryptographic methods may make use of the cryptographic sequence number.

The terms of the second aspect may be given the same meaning as in the first aspect.

Storing the token cryptographic sequence number may comprise storing the token cryptographic sequence number in a database of sequence numbers that may be addressed when processing a transaction authorization request. The token cryptographic sequence number may be stored on a server by the Issuer. The method may include storing each of the token cryptographic sequence numbers. For example, the second token cryptographic sequence number may be stored alongside the first cryptographic sequence number. In some examples, the first token cryptographic sequence number may be moved to a second database and/or a second entry in the first database when the second token cryptographic sequence number is generated and stored. The stored token cryptographic sequence number may alternatively be overwritten every time a new token is created, thus only storing the cryptographic sequence number of the most recently created token credentials.

The method may further comprise: prior to receiving the first deletion request, receiving a payment authorization request with first token credentials; retrieving the stored first cryptographic sequence number; and determining an authorization status based on the account identifier, expiry data and first stored token cryptographic sequence number.

The method may further comprise: subsequent to provisioning the second token credentials, receiving a payment authorization request with second token credentials; retrieving the stored second cryptographic sequence number; and determining an authorization status based on the account identifier, expiry data and second stored token cryptographic sequence number.

The method may further comprise: receiving a payment authorization request comprising the token credentials; retrieving the stored token cryptographic sequence number; and determining an authorization status based on the account identifier, expiry data and latest token cryptographic sequence number.

Accordingly, the sequence number presented to the transit terminal, the token PAN sequence number, is always the same regardless of the number of times the token has been reprovisioned. However, the token cryptographic sequence number is available to the payment authorizing party, such that the fraud prevention techniques associated with an incremented or otherwise different sequence number, such as preventing replay attacks, is preserved.

The token cryptographic sequence number may be stored in a database and may be associated with a value determinant on the token credentials. Retrieving the stored token cryptographic sequence number may comprise searching the database to find the value determinant on the token credentials and identifying the token cryptographic sequence number.

The value determinant on the token credentials may be indirectly related to at least a portion of the token credentials. For example, the value determinant on the token credentials may be a hash of the account identifier of the token credentials. Therefore, the stored token cryptographic sequence number may be stored on a server and associated with a hash of the account identifier, such that the token cryptographic sequence number is not directly associated with the account identifier on the server for improved security. Accordingly, in order to retrieve the token cryptographic sequence number from the database after receiving an authorization request message, the account identifier received in the message may be hashed and the database searched for the hashed account identifier.

The method may further comprise: receiving a second deletion request to delete the second token credentials from the user device; receiving a third request from the user device to provision token credentials related to the funding account; provisioning third token credentials to the user device in response to the third request, wherein the third token credentials comprise an account identifier, expiry data and a token PAN sequence number; generating a third token cryptographic sequence number of the third token credentials, wherein the third token cryptographic sequence number is different from both of the first and second token cryptographic sequence numbers; and storing the third token cryptographic sequence number.

The third token credentials may be identical to the first and second token credentials, save for the token cryptographic sequence number being incremented or otherwise changed from that associated with the first and second token credentials.

The method may further comprise: receiving a payment authorization request comprising the third token credentials; retrieving the stored third token cryptographic sequence number; and determining an authorization status based on the account identifier, expiry data and third token cryptographic sequence number.

In this way, the same authorization method may be used regardless of the number of times the token has been reprovisioned.

According to a third aspect, there is provided a system comprising a processor configured to carry out the method of the first aspect or the second aspect.

According to a fourth aspect, there is provided a computer program product comprising instructions which, when the program is executed by a computer, cause the computer to carry out the method of the first aspect or the second aspect.

According to a fifth aspect, there is provided a computer-readable storage medium comprising instructions which, when executed by a computer, cause the computer to carry out the method of the first aspect or the second aspect.

Also described is a further method for preventing tokenized payment transit fraud, the method comprising: receiving a first request from a user device to provision token credentials related to a funding account; provisioning first token credentials to the user device in response to the first request, wherein the first token credentials comprise an account identifier, expiry data and a token PAN sequence number; receiving a second request from the user device to provision token credentials related to the funding account; provisioning second token credentials to the user device in response to the second request, wherein the second token credentials comprise an account identifier, expiry data and a token PAN sequence number; wherein the account identifier, expiry data and token PAN sequence number of the second token credentials are identical to the account identifier, expiry data and token PAN sequence number of the first token credentials; and wherein the method further comprises clearing a list of Application Transaction Counter values (ATCs) associated with transactions authorized on the basis of the first token credentials.

Accordingly, the second token credentials may be identical to the first token credentials. Each transaction for every token will have an associated Application Transaction Counter (ATC) which is different for every transaction performed by that token. When transactions are authorized on the basis of the first token credentials, the authorization request will contain the current transaction ATC. The authorization system will form a list of seen ATCs. Should the same transaction authorization request be submitted again, the request will be recognized on the list of ATCs and be declined. When the second token credentials are provisioned, the list of ATCs is cleared. If the list of ATCs was not cleared, transaction authorization requests made using the second token credentials would be recognized as the transactions made with the first token credentials and be refused as a replay attack, even if that is not the case. Therefore, clearing the list of ATCs allows for legitimate transactions to be completed with the second token credentials.

Any feature disclosed with respect to one aspect may be combined with another aspect disclosed herein.

### BRIEF DESCRIPTION OF THE FIGURES

The disclosure will be further described with reference to examples depicted in the accompanying figures in which:
Figure 1 is a flowchart illustrating a first method for preventing tokenized payment transit fraud;
Figure 2 is a flowchart illustrating a method for processing a payment request including the second token credentials provisioned in the method of Figure 1;
Figure 3 is a flowchart illustrating a first method for provisioning third token credentials;
Figure 4 is a flowchart illustrating a method for processing a payment request including the third token credentials provisioned in the method of Figure 3;
Figure 5 is a flowchart illustrating a second method for preventing tokenized payment transit fraud;
Figure 6 is a flowchart illustrating a method for processing a payment request including the second token credentials provisioned in the method of Figure 5;
Figure 7 is a flowchart illustrating a second method for provisioning third token credentials;
Figure 8 is a flowchart illustrating a method for processing a payment request including the third token credentials provisioned in the method of Figure 7;
Figure 9 is a schematic diagram of a transit terminal system; and
Figure 10 is an example data format passed in a contactless authorization request message.

### DETAILED DESCRIPTION

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

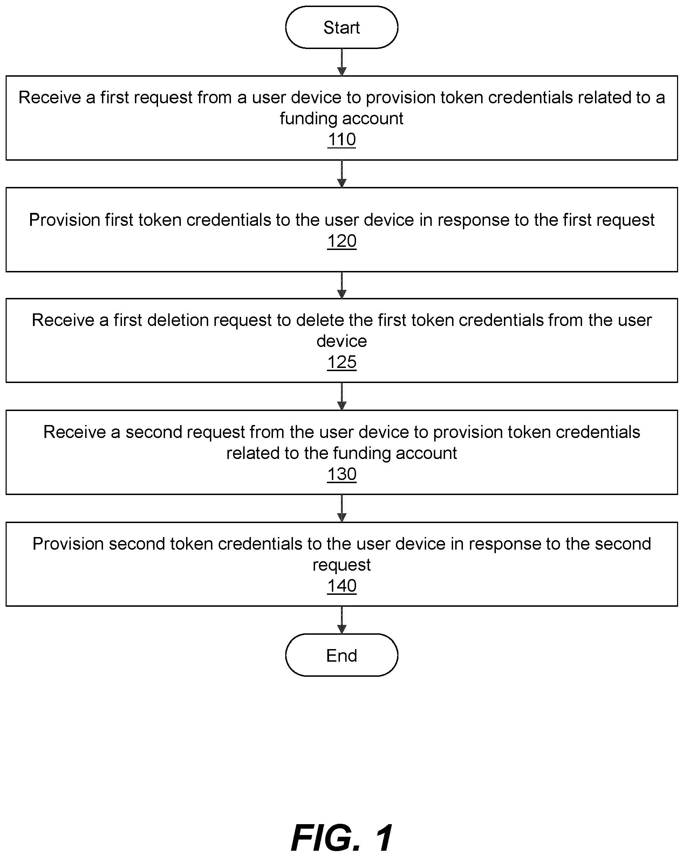

Figure 1 is a flowchart that describes a first method for preventing tokenized payment transit fraud. At a first step, the method includes receiving 110 a first request from a user device to provision token credentials related to a funding account. The first request may be received 110, for example following the user adding a payment card to their mobile wallet application. The method further includes provisioning 120 first token credentials to the user device in response to the first request. The first token credentials may be stored in the mobile wallet application on the user's device. The method includes receiving 125 a first deletion request to delete the first token credentials from the user device. The first deletion request may be sent by the user device when the user operates the user device to delete the first token credentials. The method also includes receiving 130 a second request from the user device to provision token credentials related to the funding account. The method also includes provisioning 140 second token credentials to the user device in response to the second request. The second token credentials may be stored similarly to the first token credentials.

As discussed herein, the first token credentials comprise an account identifier, expiry data, a token PAN sequence number and first discretionary data. The second token credentials comprise an account identifier, expiry data, a token PAN sequence number and second discretionary data. The account identifier, expiry data and token PAN sequence number of the second token credentials are identical to the account identifier, expiry data and token PAN sequence number of the first token credentials. The second discretionary data differs from the first discretionary data at least in that the second discretionary data may contain a token cryptographic sequence number different from the token cryptographic sequence number contained in the first discretionary data.

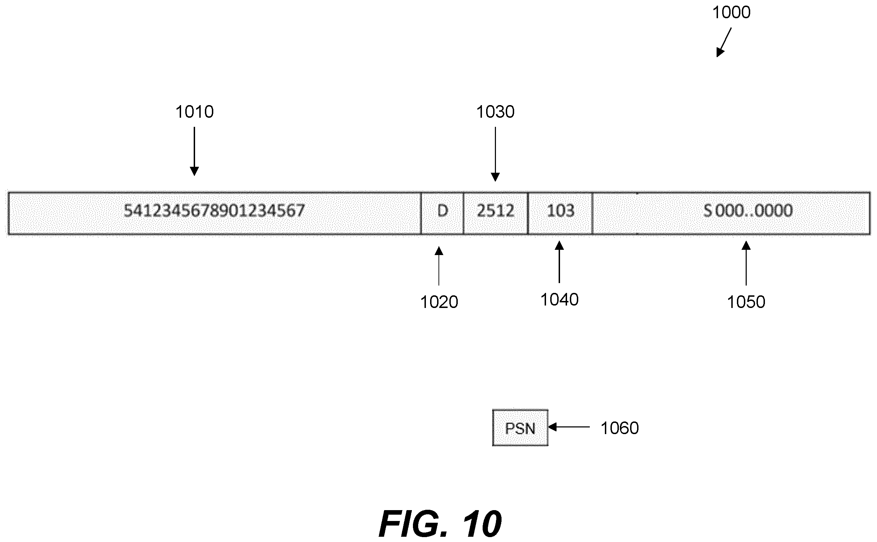

As discussed in greater detail with reference to Figure 10, the first and second discretionary data may be configured such that at least a first digit of the first and second discretionary data comprises the token cryptographic sequence number.

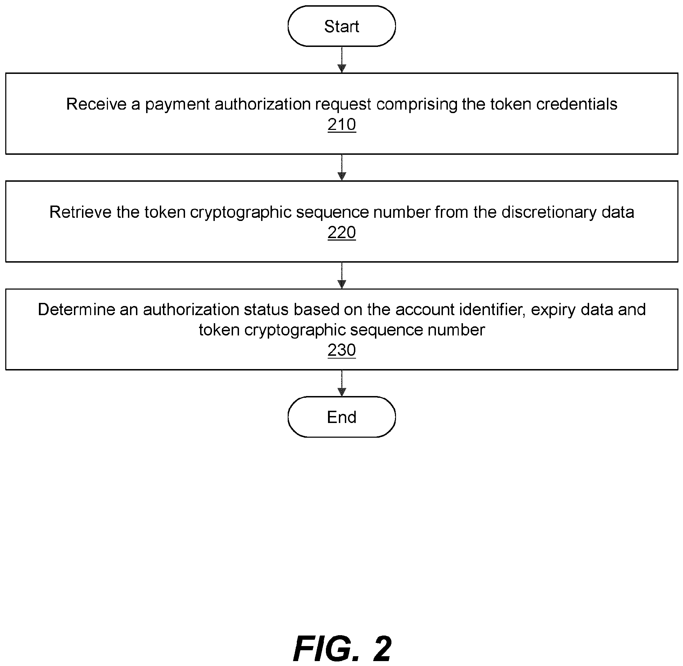

Figure 2 is a flowchart illustrating a method for processing a payment request including the token credentials provisioned in the method of Figure 1. The method includes receiving 210 a payment authorization request comprising the token credentials. Next, the method includes retrieving 220 the token cryptographic sequence number from the discretionary data. As discussed above, the token cryptographic sequence number is found in the discretionary data, for example as the first digit of the discretionary data. The method also includes determining 230 an authorization status based on the account identifier, expiry data and token cryptographic sequence number. A typical transaction request authorization flow may be maintained, with the only change required being using the token cryptographic sequence number from the discretionary data instead of the typical token PAN sequence number which is not incremented or otherwise changed.

In some examples, the token cryptographic sequence number may occupy two or more digits of the discretionary data. Increasing the number of digits of the discretionary data occupied by the token cryptographic sequence number increases the maximum sequence number possible before the sequence number resets. For example, a single digit may provide 10 total values for the token cryptographic sequence number, whereas two digits may provide 100 total values for the token cryptographic sequence number.

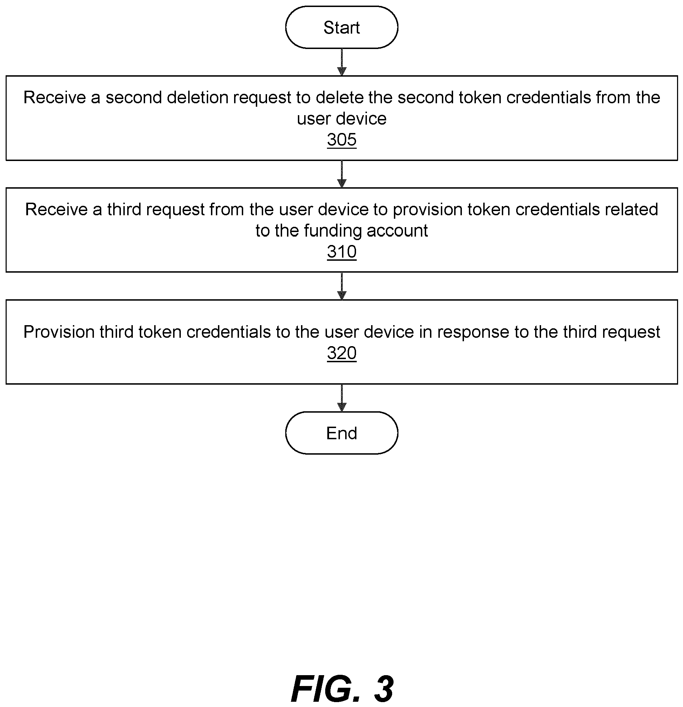

Figure 3 is a flowchart illustrating a first method for provisioning third token credentials. The method starts when a second deletion request to delete the second token credentials from the user device is received 305. The second deletion request may be sent automatically by the user device, similarly to the first deletion request discussed above. Next, a third request from the user device to provision token credentials related to the funding account is received 310. The method includes provisioning 320 third token credentials to the user device in response to the third request. The third token credentials comprise an account identifier, expiry data, a token PAN sequence number and third discretionary data. The account identifier, expiry data and token PAN sequence number of the third token credentials is identical to the account identifier, expiry data and token PAN sequence number of the first and second token credentials. The third discretionary data differs from the first and second discretionary data at least in that the third discretionary data comprises a third token cryptographic sequence number. For example, the first token credentials may comprise a token PAN sequence number of 0 and a token cryptographic sequence number of 0. The second token credentials may comprise a token PAN sequence number of 0, but a token cryptographic sequence number of 1. The third token credentials may comprise a token PAN sequence number of 0, but a further token cryptographic sequence number of 2.

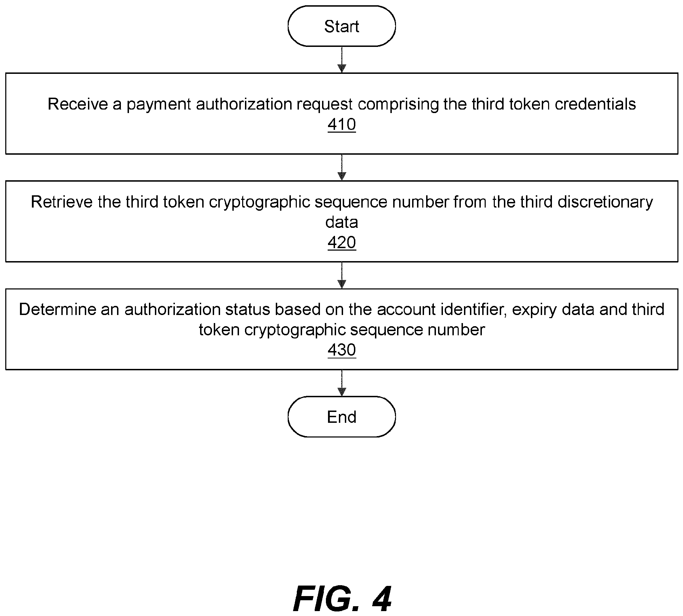

Figure 4 is a flowchart illustrating a method for processing a payment request including the third token credentials provisioned in the method of Figure 3. The method includes receiving 410 a payment authorization request comprising the third token credentials. The method further includes retrieving 420 the third token cryptographic sequence number from the third discretionary data. The method also includes determining 430 an authorization status based on the account identifier, expiry data and further token cryptographic sequence number.

In this way, a transit system may always be presented with the same token PAN sequence number, e.g. 0, so that the transit system may recognize a token on the deny list regardless of the number of times the token has been reprovisioned. The current operation of the transit system and deny list may therefore be maintained. However, any payment authorization request is determined based on the token cryptographic sequence number, which maintains the fraud protection associated with incrementing or otherwise changing the sequence number each time a token is reprovisioned.

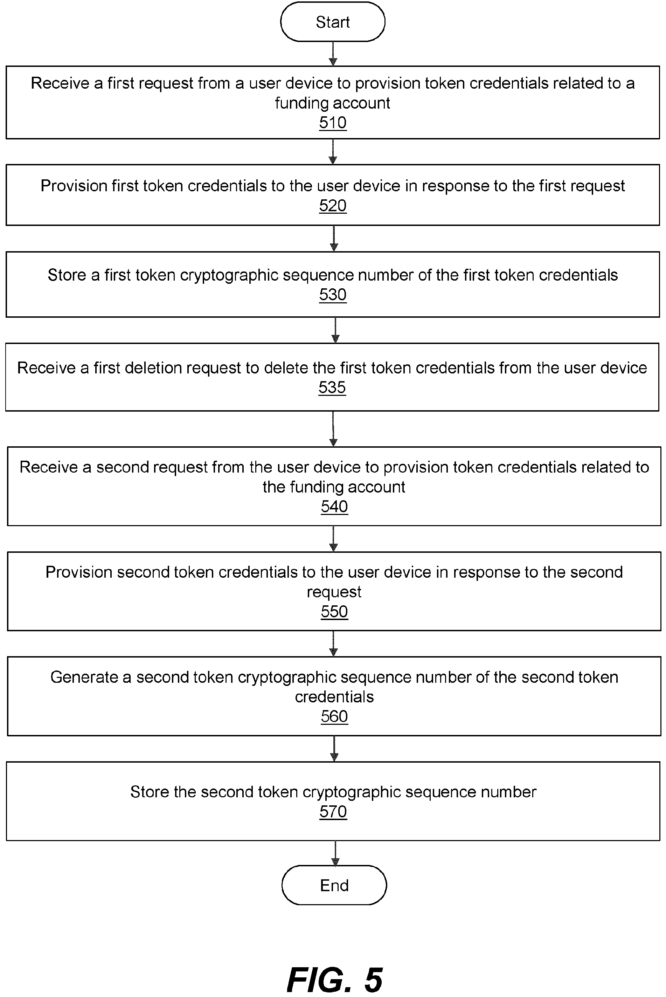

Figure 5 is a flowchart illustrating a second method for preventing tokenized payment transit fraud. The method includes receiving 510 a first request from a user device to provision token credentials related to a funding account. Next, the method includes provisioning 520 first token credentials to the user device in response to the first request. The method includes storing 530 the token cryptographic sequence number of the first token credentials. The method includes receiving 535 a first deletion request to delete the first token credentials from the user device. The method further includes receiving 540 a second request from the user device to provision token credentials related to the funding account. The second token credentials are provisioned 550 to the user device in response to the second request. The method also includes generating 560 a second token cryptographic sequence number of the second token credentials storing 570 the second token cryptographic sequence number. The first provisioned token credentials comprise an account identifier, expiry data and a token PAN sequence number. The second provisioned token credentials also comprise an account identifier, expiry data and a token PAN sequence number. The account identifier, expiry data and token PAN sequence number of the second token credentials is identical to the account identifier, expiry data and token PAN sequence number of the first token credentials. In this way, the transit system may always be presented with the same account identifier, expiry data and token PAN sequence number, regardless of the number of times the token credentials have been reprovisioned.

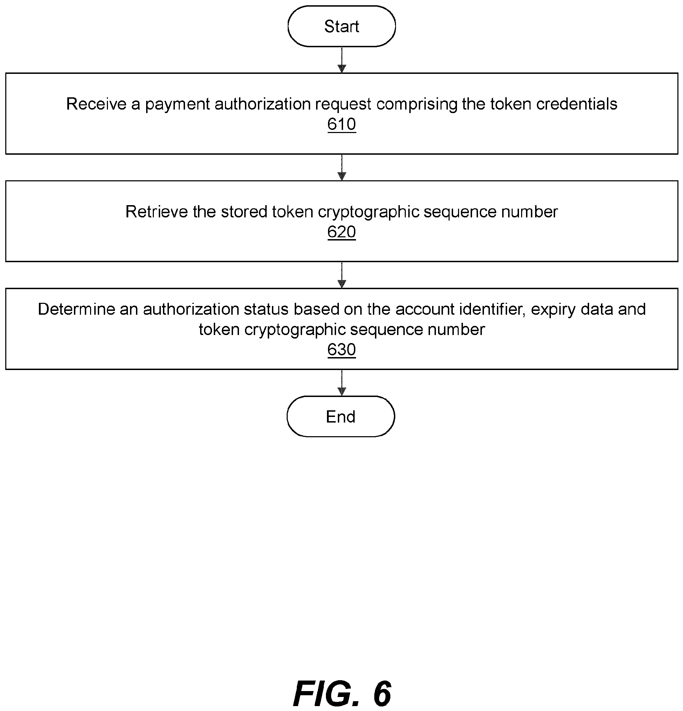

Figure 6 is a flowchart illustrating a method for processing a payment request including the token credentials provisioned in the method of Figure 5. The method includes receiving 610 a payment authorization request comprising the token credentials. Next, the method includes retrieving 620 the stored token cryptographic sequence number. The method also includes determining 630 an authorization status based on the account identifier, expiry data and token cryptographic sequence number. In this way, any payment authorization request is determined based on the token cryptographic sequence number, which maintains the fraud protection associated with incrementing or otherwise changing the sequence number each time a token is reprovisioned.

The token cryptographic sequence number may be stored in a database and may be associated with a value determinant on the token credentials. In some examples, the value determinant on the token credentials may be indirectly related to at least a portion of the token credentials. For example, the value determinant on the second token credentials may be a hash of the account identifier.

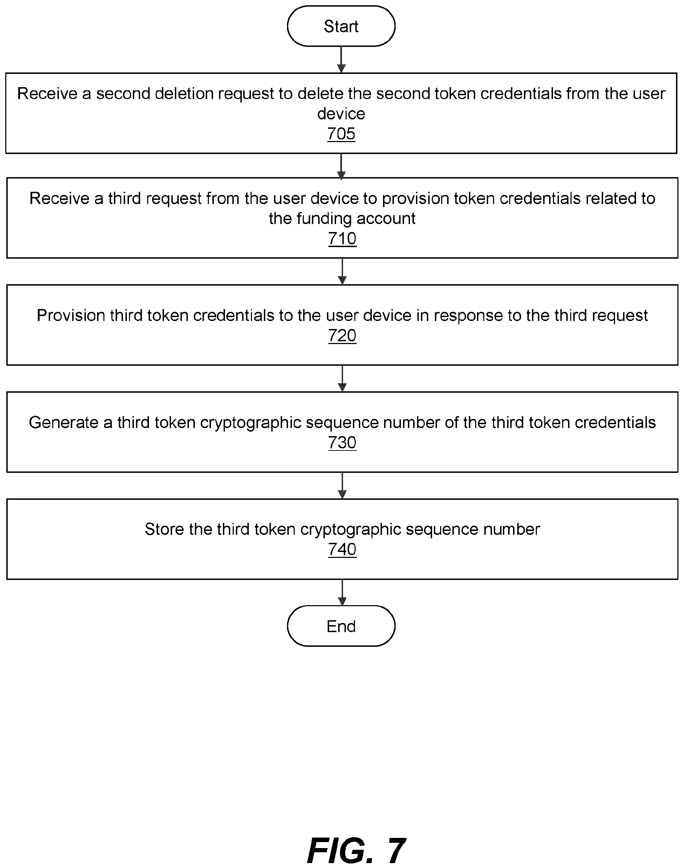

Figure 7 is a flowchart illustrating a second method for provisioning third token credentials. The method includes receiving 705 a second deletion request to delete the second token credentials from the user device. The method includes receiving 710 a third request from the user device to provision token credentials related to the funding account. Next, the method includes provisioning 720 third token credentials to the user device in response to the third request. The method also includes generating (730) a third token cryptographic sequence number of the third token credentials, and storing 740 the third token cryptographic sequence number.

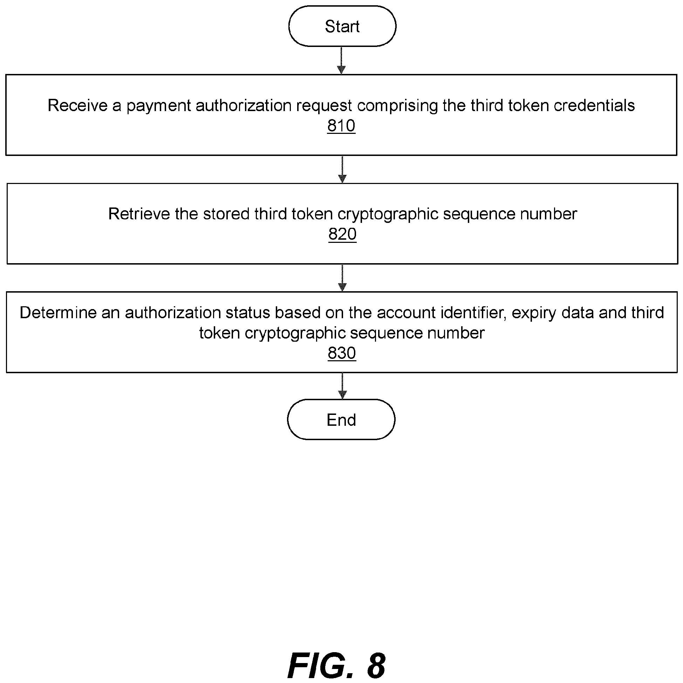

Figure 8 is a flowchart illustrating a method for processing a payment request including the third token credentials provisioned in the method of Figure 7. The method includes receiving 810 a payment authorization request comprising the third token credentials. The method also includes retrieving 820 the stored third token cryptographic sequence number. Next, the method includes determining 830 an authorization status based on the account identifier, expiry data and third token cryptographic sequence number.

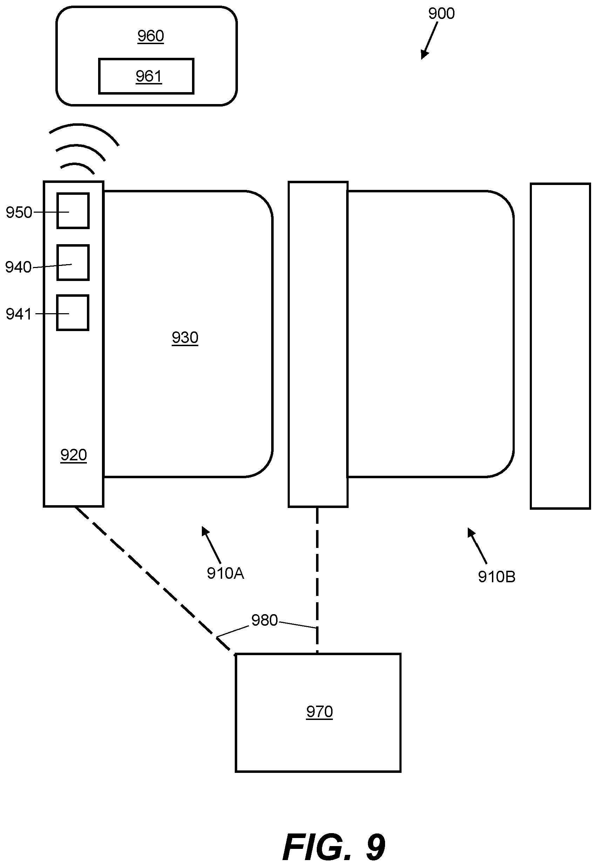

Figure 9 is a schematic diagram of a transit terminal system 900. The system 900 may be, for example, a network of gates or barriers at a train station. Other transit specific systems, such as those present on bus or tram networks, are also envisaged.

The system 900 includes two transit terminals, first terminal 910A and second terminal 910B. The first terminal 910A and second terminal 910B are functionally identical and may be two of tens, hundreds or thousands of such like terminals. For purposes of brevity, only the functioning of the first terminal 910A will be described herein, but the description of the first terminal 910A is considered to apply equally to the second terminal 910B and any other terminal (not shown) in the system 900.

The first terminal 910A includes a fixed barrier portion 920 and a moveable barrier portion 930. The fixed barrier portion 920 may be a post or any other suitable fixed structure. The moveable barrier portion 930 is configured to be moveable relative to the fixed barrier portion 920 between a closed position, as shown in Figure 9, and an open position (not shown). With the moveable barrier portion 930 in the closed position, the first terminal 910A is arranged to prevent a consumer from passing therethrough. With the moveable barrier portion 930 in the open position, the first terminal 910A is arranged to allow a consumer to pass therethrough.

The first terminal 910A includes a processor 940 and associated memory 941. The processor 940 and memory 941 are shown in the fixed barrier portion 920, but the processor 940 and memory 941 may be alternatively positioned or arranged. The processor 940 is configured to control operation of the first terminal 910A, such as opening of the first terminal 910A by controlling a mechanism (not shown) to move the moveable barrier portion 930 from the closed position and the open position.

The processor 940 also controls operation of an NFC transceiver 950, also shown to be arranged within the fixed barrier portion 920. The NFC transceiver 950 may be arranged to continuously or continually search for an NFC enabled device 960. When a consumer brings an NFC enabled device 960 within range of the NFC transceiver 950, the processor 940 may interrogate a memory 961 of the consumer device 960. The memory 941 associated with the processor 940 may locally store a deny list or have access to a deny list over a network or through alternative means. The deny list contains a list of accounts that cannot be used to access the transit system, for example for not having adequate funds in the funding account to pay for a previously completed journey.

Should the details of the account associated with the consumer device 960 not be found on the deny list, the moveable barrier portion 930 may be moved to the open position such that the consumer is allowed access to the station via the first terminal 910A. As the decision to permit or deny entry via the first terminal 910A is carried out without completing a transaction, the time between the NFC transceiver 950 identifying the consumer device 960 and the moveable barrier portion 930 being moved to the open position may be less than 500 ms, particularly less than 300 ms. It is typically not possible to wait for a transaction to be authorized at the terminal and also meet the requirements for minimum number of consumers able to pass through the terminal per minute, such as 40 per minute.

The processor 940 of the first terminal 910A, and the processor of each other terminal in the system 900, is in communication with a central server 970 via a network 980. The central server 970 is configured to maintain the deny list in a master form. In particular, the central server 970 is configured to receive device identification data corresponding to delinquent devices following the inability to complete a transaction and add such device identification data to the deny list. Furthermore, should the reason for identification data being present on the deny list be rectified, for example by clearing a debt, the server 970 is configured to remove such device identification data from the deny list.

However, when the consumer device 960 includes a token instead of physical card or account details, it is the token details that are stored on the deny list. Therefore, a user may, for example, add a funding account to a wallet application on their smartphone and be provisioned with a token. The user may then use the token to access the transit system, even if there are insufficient funds in the funding account. The user may complete their journey without paying and have the token details added to the deny list.

Through use of the method of Figure 1 or Figure 5, the user is reprovisioned with a second token that has identical account identifier, expiry data and token PAN sequence number as the first token. The deny list holds the account identifier, expiry data and token PAN sequence number of the first token. Accordingly, when a user reprovisions their device with the second token and attempts to make a further journey, the processor 940 recognizes the second token credentials on the deny list and denies access to the transit system.

Figure 10 is an example data format 1000 passed in a contactless authorization request message. The data is provided as a string comprising an account identifier 1010, a separator 1020, expiry data 1030, a service code 1040, and discretionary data 1050. The account identifier 1010 resembles an account number, such as a primary account number, and is typically between 16 and 19 characters long. The separator 1020 denotes the end of the account identifier 1010 and is required due to the length of the account identifier being variable. The expiry data is typically provided in a YYMM format, such as 2512 for December 2025, although other formats are envisaged. The discretionary data 1050 contains one or more characters representing the token cryptographic sequence number S, either in the first position as shown or in any other position or positions according to a particular implementation. The data also includes as a separate data item 1060 which is the token PAN sequence number (PSN).

When a transit system is informed or determines that a funding account has insufficient funds to pay for a journey, the account identifier 1010, the expiry data 1030 and the token PAN sequence number 1060 are added to the deny list. Should a user attempt to begin another journey with the same token credentials, the transit system recognizes the account identifier 1010, the expiry data 1030 and the token PAN sequence number 1060 and denies the user entry to the transit network.

The user may delete the token and make a request for the token to be reprovisioned. With typically known token provisioning methods, the user would be provisioned with a token having a token PAN sequence number. For example, the first token credentials may have a PAN sequence number 0, whereas the second token credentials may have a PAN sequence number 1. Accordingly, the transit system will not recognize the second token credentials as being on the deny list because the token PAN sequence number 1060 of the second token is different to the token PAN sequence number 1060 from the first token which may be stored on the deny list. The user of this second token may therefore gain entry to the transit network and complete a further journey without adequate funds.

According to the methods shown in Figure 1 and Figure 5, the user would be provisioned with second token credentials have the same account identifier 1010, expiry data 1030 and token PAN sequence number 1060 as the first token credentials, and as found on the deny list. The transit system may therefore recognize the second token credentials as the first token credentials, which are present on the deny list, and deny the user access to the transit network.

Following the method shown in Figure 1, the discretionary data may be configured such that at least a first digit of the discretionary data comprises the token cryptographic sequence number. In alternative examples, the token cryptographic sequence number may be provided in one or more other digits of the discretionary data.

## Claims

1. A method for preventing tokenized payment fraud, the method comprising:
receiving (110) a first request from a user device to provision token credentials related to a funding account;
provisioning (120) first token credentials to the user device in response to the first request, wherein the first token credentials comprise an account identifier, expiry data, a token PAN sequence number and first discretionary data;
receiving (125) a first deletion request to delete the first token credentials from the user device;
receiving (130) a second request from the user device to provision token credentials related to the funding account; and
provisioning (140) second token credentials to the user device in response to the second request, wherein the second token credentials comprise an account identifier, expiry data, a token PAN sequence number and second discretionary data;
wherein the account identifier, expiry data and token PAN sequence number of the second token credentials are identical to the account identifier, expiry data and token PAN sequence number of the first token credentials; and
wherein the second discretionary data differs from the first discretionary data at least in that the first discretionary data comprises a first token cryptographic sequence number and the second discretionary data comprises a second token cryptographic sequence number that is different from the first token cryptographic sequence number.

2. The method of claim 1, further comprising:
receiving (210) a payment authorization request comprising the token credentials;
retrieving (220) the token cryptographic sequence number from the discretionary data; and
determining (230) an authorization status based on the account identifier, expiry data and token cryptographic sequence number.

3. The method of claim 1 or 2, wherein the token cryptographic sequence number occupies any one, two or more digits of the discretionary data.

4. The method of claim 3, wherein the first and second discretionary data is configured such that at least a first digit of the first and second discretionary data comprises the token cryptographic sequence number.

5. The method of any preceding claim, further comprising:
receiving (305) a second deletion request to delete the second token credentials from the user device;
receiving (310) a third request from the user device to provision token credentials related to the funding account; and
provisioning (320) third token credentials to the user device in response to the third request, wherein the third token credentials comprise an account identifier, expiry data, a token PAN sequence number and third discretionary data;
wherein the account identifier, expiry data and token PAN sequence number of the third token credentials are identical to the account identifier, expiry data and token PAN sequence number of the first and second token credentials; and
wherein the third discretionary data differs from the first and second discretionary data at least in that the third discretionary data comprises a third token cryptographic sequence number that is different from both of the first and second token cryptographic sequence numbers.

6. The method of claim 5, further comprising:
receiving (410) a payment authorization request comprising the third token credentials;
retrieving (420) the third token cryptographic sequence number from the third discretionary data; and
determining (430) an authorization status based on the account identifier, expiry data and third token cryptographic sequence number.

7. A method for preventing tokenized payment transit fraud, the method comprising:
receiving (510) a first request from a user device to provision token credentials related to a funding account;
provisioning (520) first token credentials to the user device in response to the first request, wherein the first token credentials comprise an account identifier, expiry data and a token PAN sequence number;
storing (530) a first token cryptographic sequence number of the first token credentials;
receiving (535) a first deletion request to delete the first token credentials from the user device;
receiving (540) a second request from the user device to provision token credentials related to the funding account;
provisioning (550) second token credentials to the user device in response to the second request, wherein the second token credentials comprise an account identifier, expiry data and a token PAN sequence number; and
generating (560) a second token cryptographic sequence number of the second token credentials, wherein the second token cryptographic sequence number is different from the first token cryptographic sequence number; and storing (570) the second token cryptographic sequence number;
wherein the account identifier, expiry data and token PAN sequence number of the second token credentials are identical to the account identifier, expiry data and token PAN sequence number of the first token credentials.

8. The method of claim 7, further comprising:
receiving (610) a payment authorization request comprising the token credentials;
retrieving (620) the stored token cryptographic sequence number; and
determining (630) an authorization status based on the account identifier, expiry data and token cryptographic sequence number.

9. The method of claim 7, wherein:
the second token cryptographic sequence number is stored in a database and is associated with a value determinant on the token credentials; and
retrieving (620) the stored second token cryptographic sequence number comprises searching the database to find the value determinant on the token credentials and identifying the second token cryptographic sequence number.

10. The method of claim 9, wherein the value determinant on the token credentials is indirectly related to at least a portion of the token credentials.

11. The method of any of claims 7 to 10, further comprising:
receiving (705) a second deletion request to delete the second token credentials from the user device;
receiving (710) a third request from the user device to provision token credentials related to the funding account;
provisioning (720) third token credentials to the user device in response to the third request, wherein the third token credentials comprise an account identifier, expiry data and a token PAN sequence number; and
generating (730) a third token cryptographic sequence number of the third token credentials, wherein the third token cryptographic sequence number is different from both of the first and second token cryptographic sequence numbers; and storing (740) the third token cryptographic sequence number;
wherein the account identifier, expiry data and token PAN sequence number of the third token credentials are identical to the account identifier, expiry data and token PAN sequence number of the first and second token credentials.

12. The method of claim 11, further comprising:
receiving (810) a payment authorization request comprising the token credentials;
retrieving (820) the stored third token cryptographic sequence number; and
determining (830) an authorization status based on the account identifier, expiry data and third token cryptographic sequence number.

13. A system comprising a processor configured to carry out the method of any preceding claim.

14. A computer program product comprising instructions which, when the program is executed by a computer, cause the computer to carry out the method of any of claims 1 to 12.

15. A computer-readable storage medium comprising instructions which, when executed by a computer, cause the computer to carry out the method of any of claims 1 to 12.
